# EUROPEAN PATENT SPECIFICATION

(11) **EP 2 748 256 B1**
(45) Date of publication and mention of the grant of the patent: **14.06.2017**
(21) Application number: 12781485.3
(22) Date of filing: 24.10.2012
(51) Int. Cl.: C08L 67/00, C08L 67/04

(54) **A COMPOUND COMPRISING PLLA AND PDLA**
VERBINDUNG MIT PLLA UND PDLA
COMPOSÉ COMPRENANT PLLA ET PDLA

(30) Priority: 24.10.2011 NL 1039128
(43) Date of publication of application: 02.07.2014
(73) Proprietor: PURAC Biochem BV, 4206 AC Gorinchem (NL)
(72) Inventor: NOORDEGRAAF, Jan, 6602 ZX Wijchen (NL); DE JONG, Josephus Petrus Maria, 4812 LB Breda (NL)
(74) Representative: De Vries & Metman
(86) International application number: PCT/NL2012/050743
(87) International publication number: WO 2013/062412

(56) References cited:
- EP-A1- 2 116 575
- US-A1- 2008 097 074

## Description

The present invention relates to a compound comprising a poly-D-lactic acid (PDLA) polymer and a poly-L-lactic acid (PLLA) polymer. The present invention also relates to a process for the production of a moulded part, the process comprising the steps of heating a mould, and supplying to the mould a compound comprising a poly-D-lactic acid (PDLA) polymer and a poly-L-lactic acid (PDLA) polymer. The present invention relates to a compound comprising a poly-D-lactic acid (PDLA) polymer and a poly-L-lactic acid (PLLA) polymer for use in injection-moulding, thermoforming and/or film blowing. The present invention also relates to a compound that can be obtained by heating a compound comprising a poly-D-lactic acid (PDLA) polymer and a poly-L-lactic acid (PDLA) polymer.

Polylactic acid (PLA) is a collective term used for polymers based on lactic acid monomers, the structure of the polylactic acid varying from completely amorphous via semi-crystalline to crystalline, depending on the composition. Polylactic acid can be produced from milk products or from for example maize. Lactic acid is the monomer of which polylactic acid is composed, and this monomer exists in two stereoisomers, viz. L-lactic acid (dextrorotatory lactic acid) and D-lactic acid (levorotatory lactic acid). So polylactic acid contains a certain proportion of L-lactic acid monomers and a certain proportion of D-lactic acid monomers. The ratio between the L and D lactic acid monomers in polylactic acid determines its properties.

EP 211 65 75 describes a polylactic acid having a high molecular weight such as a weight average molecular weight (Mw) of more than 100,000. Said polylactic acid is obtained by a process comprising the steps of: (i) obtaining a solid by kneading together poly (L-lactic acid) and poly(D-lactic acid) at a preferred ratio from 30/70 to 70/30 and at a temperature of 160 to 225 °C and crystallizing the kneaded product; and (ii) melt kneading the obtained solid.

US 2008/0097074 describes a polylactic acid resin composition comprising polylactic acid capable of generating stereocomplex crystallization and an aromatic urea compound. The polylactic acid resin may be obtained by mixing PLLA and PDLA at a ratio of 1:1, each having an optical purity of 99%, with xylene bisstearyl urea.

The use of PLA in applications such as film blowing, thermoforming and injection-moulding is increasing on account of an increasing preference for renewable resources. The use of PLA in such applications however involves a great disadvantage, and that is the moderate properties of PLA at elevated temperatures. PLA for example has moderate thermal stability. At temperatures above its glass transition temperature (55°C), PLA loses its stiffness. This expresses itself in a low modulus of elasticity above the glass transition temperature, as a result of which long cooling times are necessary before products can be ejected in the case of injection-moulding or thermoforming. This results in long cycle times in the production of products based on PLA and results in end products that readily deform at elevated temperatures.

PLA also has a moderate melt strength above its melting point, which in the case of film blowing, for example, results in an unstable blowing process. Products based on PLA moreover have a fairly low heat deflection temperature above the glass transition temperature of PLA.

A method frequently used to solve the aforementioned problems is controlled crystallisation of PLA, because the modulus of elasticity of crystallised PLA is higher than that of amorphous PLA. The heat deflection temperature of products based on PLA moreover increases above the glass transition temperature in accordance with increasing crystallinity. Crystallisation of PLA occurs when certain conditions are met. In the first place the chemical composition of PLA must not hinder crystallisation. Secondly, the PLA must be sufficiently heated to effect crystallisation. In practice this means a sufficiently long residence time at an elevated temperature. A disadvantage is that, even if these conditions are met, crystallisation of PLA tends to proceed very slowly, as a result of which it cannot be applied on a commercial scale.

One object of the present invention is therefore to provide a compound comprising a poly-D-lactic acid (PDLA) polymer and a poly-L-lactic acid (PLLA) polymer that does not involve the aforementioned disadvantages.

One object of the present invention is to provide a compound containing a poly-D-lactic acid (PDLA) polymer and a poly-L-lactic acid (PLLA) polymer that has improved thermal stability and a higher crystallisation rate.

Another object of the present invention is to provide a solution to the aforementioned disadvantages involved in the use of PLA, to ensure that PLA can be used on a commercial scale in applications such as film blowing, thermoforming or injection-moulding.

The aforementioned objects are accomplished by a compound comprising a poly-D-lactic acid (PDLA) polymer and a poly-L-lactic acid (PLLA) polymer, the optical purity of at least the PDLA or PLLA being at least 95% and the PDLA being present in an amount of at most 10 wt.% relative to the weight of the total compound, and preferably at least 1 wt.%. The term "poly-D-lactic acid (PDLA) polymer" is also understood to mean a mixture of PDLA molecules having different molecular weights. The term "poly-L-lactic acid (PLLA) polymer" is also understood to mean a mixture of PLLA molecules having different molecular weights.

The present inventors have found that if PDLA is at least 95% optically pure, a composition based on PLLA is obtained [and] the crystallisation time is shortened relative to that of compounds according to the prior art. The present inventors have found that the addition of a special nucleating agent can increase the crystallisation rate of PLA so that very short cooling times can be realised. It was already known from the literature that small amounts of talc can have a positive effect on the crystallisation rate of PLA, but the present inventors have found that stereocomplex PLA is a better nucleating agent. Stereocomplex PLA is formed when PLLA and PDLA are mixed. It is a special three-dimensional ordering of PLLA and PDLA molecules resulting in very stable crystals. This is evident from for example a higher melting point (230°C instead of the 180°C of PLLA and PDLA). A small amount of PDLA added to PLLA will result in a small amount of stereocomplex PLA that can act as a nucleating agent for the rest of the PLA matrix. The inventors have found that PDLA with an optical purity of at least 95% is a particularly good nucleating agent.

As mentioned above, PLA is a collective noun used for polymers based on lactic acid or lactide. Lactic acid exists in two forms that differ in terms of properties only in the direction in which polarised light is deflected. Lactide is a dimer of lactic acid that occurs in three forms. L-lactide can be produced on the basis of L-lactic acid, and D-lactide can be produced on the basis of D-lactic acid. A combination of L-lactic acid and D-lactic acid results in meso-lactide, which has a lower melting point than L-lactide and D-lactide. L-lactide and D-lactide are also referred to as dextrorotatory and levorotatory lactide. Synterra® as produced by Synbra Technology bv (at Etten-Leur) contains exclusively L-lactide and D-lactide. The ratio between L-lactide and D-lactide is called optical purity and largely determines the properties of PLA. Depending on the optical purity, PLA may be amorphous or semi-crystalline. The greater the optical purity, the more readily PLA will crystallise. The optical purity is also expressed via the D-content, by which is meant the percentage of D-lactide in PLA. The PLA that is currently commercially available has a D-content ranging between 0 and 25%. When PLA contains more than about 12% D-lactide it can no longer crystallise and is amorphous. When the D-content is lower than 12%, the PLA is referred to as semi-crystalline. PLA that consists exclusively of L-lactide or D-lactide is referred to as dextrorotatory PLLA or levorotatory PDLA, respectively. That is optically pure PLA that will very readily crystallise.

The D-content can be determined with a so-called R-lactate determination, in which the ratio between L- and D-lactic acid is determined with the aid of gas-liquid chromatography (GLC) after complete hydrolysis of PLA. Another method is to determine the optical rotation of polarised light, which can be measured in chloroform using a Jasco DIP-140 polarimeter at a wavelength of 589 nm.

The crystallinity and crystallisation rate of PLA can be determined by means of Differential Scanning Calorimetry (DSC). In a DSC diagram, amorphous PLA will show only a glass transition point, at about 55°C, whereas semi-crystalline PLA will also show a crystallisation and/or melting peak. The size of the melting peak will be determined by the thermal history of the PLA, and is a measure of the extent to which crystallisation has taken place. The position of the melting peak is determined by the optical purity: as the optical purity of the PLA increases, the peak will shift to a higher temperature, until a maximum of about 180°C is reached for PLLA or PDLA.

In addition to the stereocomplex PLA proving to be a very efficient nucleating agent for injection-moulding or thermoforming, the present inventors have found that stereocomplex crystals also have a positive effect on the melt strength of PLA. This is favourably expressed in a more stable blowing process in film blowing, and in higher pressures during mixing.

In one embodiment of the present invention the optical purity of PDLA is at least 99.5%. The present inventors have found that surprisingly good results in terms of crystallisation rate are obtained at such an optical purity.

The PDLA is present in an amount of at most 10 wt.% relative to the weight of the total compound, and preferably at least 1 wt.%. The PDLA is preferably present in an amount ranging between 4 and 7 wt.%. The present inventors have found that too much PDLA results in poorer mechanical properties in the end product. An end product with good mechanical properties was obtained with a compound comprising PDLA in the aforementioned amounts.

In one embodiment of the present invention the PLLA is present in an amount ranging between 65 and 85 wt.% relative to the total weight of the compound. The optical purity of PLLA is preferably at least 95%, more preferably at least 99.5%. The present inventors have found that the crystallisation rate is very good at such an optical purity, leading to the aforementioned advantages.

The present inventors have found that the crystallisation rate of PLA can be positively influenced by using optically pure PLA in applications such as injection-moulding and thermoforming. Such PLA is sold for example under the brand names Synterra® PLLA and Synterra® PDLA. The PLLA and PDLA are 99.5% optically pure. Optically pure PLA can crystallise faster than PLA of a lower optical purity, as a result of which cooling times in these applications can be shortened.

In one embodiment of the present invention the composition comprises at least one filler selected from the group consisting of chalk, talc, starch, modified starch, flour, sawdust, flax, aluminium oxide, magnesium oxide, hydrated aluminium silicate, kaolin, the polymers PHA, PHB, PBS, PBT and PBAT, Ecoflex or cellulose, or mixtures hereof. Preferably the at least one filler is present in an amount of at most 30 wt.% based on the composition's total weight. Particularly preferable are fillers such as chalk, starch, flour, kaolin, Ecoflex or cellulose.

In one embodiment of the present invention the average molecular weight of the PDLA polymers or mixtures hereof ranges between 70 and 300 kDa, preferably between 30 and 150 kDa, the molecular weight (Mn) being determined with the aid of GPC (Gel Permeation Chromatography), on the basis of polystyrene standards. This means that the average molecular weight of PLLA and PDLA is determined on the basis of polystyrene molecules with known average molecular weights, because the rate at which the stereocomplex PLA is formed increases as the molecular weight of the employed PDLA decreases, enabling control of the cooling time in injection-moulding or thermoforming. The present inventors have found that if the employed PDLA has such an average molecular weight, good results are obtained in terms of the composition's properties. PDLA with a too low molecular weight will result in poorer properties in the end product, which is undesirable.

The present inventors have also found that too much PDLA with a too low average molecular weight results in poorer mechanical properties in the end product, implying that there is an optimum amount of PDLA with an optimum average molecular weight. This was found to lie in a combination of the aforementioned parameters for average molecular weight and the amount of PDLA.

In one embodiment of the present invention the composition comprises at least one impact modifier or plasticiser in an amount of preferably at most 10 wt.%, preferably at most 5 wt %, relative to the composition's total weight.

The present inventors have found that it is possible to use impact modifiers such as Biostrength 150 (Arkema) to improve the mechanical properties of end products based on PLLA/PDLA compounds. Too much impact modifier will however lower the modulus of elasticity, making it more difficult to eject products in injection-moulding or thermoforming. Such an effect was observed when use was made of plasticisers such as dioctyl adipate (DOA), which can be used to obtain extra control over the crystallisation rate of PLLA/PDLA blends. The present inventors have found that the mechanical properties of the compound according to the present invention are improved at the aforementioned amounts.

The invention also relates to a method for the production of a moulded part comprising the steps of:
i. heating a mould;
ii. supplying to the mould a compound comprising a poly-D-lactic acid (PDLA) polymer and a poly-L-lactic acid (PDLA) polymer, the optical purity of at least the PDLA or PLLA being at least 95% and the PDLA being present in an amount of at most 10 wt.% relative to the weight of the total compound, and preferably at least 1 wt.%;
iii. forming the moulded part;
iv. removing the moulded part from the mould.

The present inventors have found that moulded parts (the end products) obtained with this method have a higher deflection temperature than moulded parts based on compounds comprising PDLA of a lower optical purity (less than 95% optically pure). Moulded parts based on PLLA to which PDLA has been added and which are processed with a heated mould (step i) crystallise so fast that a higher deflection temperature is obtained. These products will not, or virtually not deform in the temperature range above the glass transition temperature of PLA and below 100°C, which greatly increases the possibilities of using PLA.

In one embodiment of the present invention the mould is in step i heated to a temperature of 90-140°C, preferably 100-120°C. The present inventors have found that the crystallisation rate of PLA in applications such as injection-moulding and thermoforming can be further increased by using a hot mould. Because PLA, in particular optically pure PLA, crystallises faster in a hot mould, a modulus of elasticity at which products can be ejected without deformation is obtained quicker, which is advantageous in terms of for example the cycle time.

In one embodiment of the present invention the compound supplied in step ii is one of the compounds described above.

In one embodiment of the present invention the method is carried out within a certain time, called the cycle time, said cycle time being at most 150 seconds, preferably at most 85 seconds, more preferably at most 65 seconds. The cycle time is the time needed to form a product; it is also described as the time that passes between the formation of two successive products. Because the composition according to the present invention has a short crystallisation time, the cycle time in the production of a moulded part based on the composition is short, which increases the production capacity and makes the use of PLA blends commercially attractive.

The present invention relates to a composition comprising a poly-D- lactic acid (PDLA) polymer and a poly-L-lactic acid (PLLA) polymer for use in injection-moulding, thermoforming and/or film blowing, the optical purity of the PDLA and PLLA being at least 95% and the PDLA being present in an amount of at most 10 wt.% relative to the weight of the total compound, and preferably at least 1 wt.%. It is possible to use PLA blends in such processes thanks to the favourable mechanical properties and the high crystallisation rate.

The present invention relates to a composition that can be obtained by heating a compound comprising a poly-D-lactic acid (PDLA) polymer and a poly-L-lactic acid (PLLA) polymer, the optical purity of the PDLA and PLLA being at least 95% and the PDLA being present in an amount of at most 10 wt.% relative to the weight of the total compound, and preferably at least 1 wt.%. The exact structure of this composition after heating is not known to the inventors, but the inventors have found that this composition involves clear advantages over similar compounds according to the prior art. A product obtained by heating a compound comprising a poly-D-lactic acid (PDLA) polymer and a poly-L-lactic acid (PLLA) polymer as described above has a high deflection temperature if the compound is heated to above its glass transition temperature.

The compound to be heated preferably corresponds to the embodiments described above. The compound is preferably obtained by heating the compound to a temperature of 90-140°C , preferably 100-120°C.

The present invention will be further explained with reference to some examples. These examples are not intended to restrict the invention. The enclosed claims form part of this description via this reference.

### Examples

The following measuring methods are used in the examples:
HDT-B is determined according to ISO-75 (HDT = Heat Deflection Temperature).

The modulus of elasticity, tensile strength and elongation at break are determined according to ISO-527-1 2010.

The notched Izod impact is determined according to ISO-179 and the Charpy impact according to ISO-179 2000.

A Berstdorff ZE75A twin screw extruder was used as the extruder.

### Example 1 (prior art)

From the literature it is known that the addition of a nucleating agent to PLA is a way of causing PLA to crystallise faster and to obtain a higher deflection temperature at an elevated temperature. In this example Ingeo™ (Natureworks) was mixed with two nucleating agents (ULTRATALC 609 and LAK-301) to increase the crystallisation rate.

Table 1 shows the results that Natureworks obtained for compounds HHIM and 3801X. Table 1 shows the ingredients; the amounts of the ingredients are expressed in percent by weight (wt.%) relative to the compound's total weight.

As expected, higher crystallisation rates (HDT-B values) were obtained after crystallisation, but the crystallisation rate was still found to be too low, resulting in long cycle times (longer than 150 seconds). Because of this, these formulations for injection-moulding or thermoforming are not yet suitable for commercial purposes.

**Table 1: Ingeo™ HHIM & 3801X**

| ***Component*/*Property*** | **HHIM (wt.%)** | **3801X (wt.%)** |
|---|---|---|
| Ingeo™ 3251D (Natureworks) | 79 | - |
| Ingeo™ 3001D (Natureworks) | - | 71.1 |
| Plasthall^{®} DOA (The HallStar Company) | 10 | 9 |
| ULTRATALC 609 (Specialty Minerals) | 10 | 9 |
| LAK-301 (Takemoto Oil & Fat Co.) | 1 | 0.9 |
| Biostrength^{®} 150 (Arkema) | - | 10 |
| HDT-B (°C) | 110 | 65 |
| Modulus of elasticity (MPa) | 3500 | 2980 |
| Tensile strength (MPa) | 26 | 25.9 |
| Elongation at break (%) | 6.5 | 8.1 |
| Izod impact, notched (J/m) | 0.16 | 144 |

### Example 2

Example 2 shows that PDLA with an optical purity of 99.5% can be used as a nucleating agent for PLA. As in the previous example, higher HDT-B values were obtained after crystallisation. In addition, an increase in the tensile strength was observed when PDLA with an optical purity of at least 99.5 % was present. In particular in the case of samples 3-6 a clear increase in tensile strength and elongation at break was observed relative to the compounds of example 1.

**Table 2: Ingeo™ 6201D & PDLA (* comparative example)**

| **Component/Property** | 1* | 2 | 3 | 4 | 5 | 6 |
|---|---|---|---|---|---|---|
| Ingeo™ 6201 D (Natureworks) | 100 | 90 | 85 | 72 | 85 | 81 |
| Synterra^{®} PDLA 0710 (Synbra) | - | 5 | 5 | 4 | 4.75 | 4.5 |
| DOA (Sigma) | - | 5 | 10 | 4 | 4.75 | 4.5 |
| Ecoflex (BASF) | - | - | - | 20 | - | - |
| Biostrength^{®} 150 (Arkema) | - | - | - | - | 5.5 | 10 |
| HDT-B (°C) | 54.2 | 109.2 | 99.4 | 83.1 | 97 | 60.6 |
| Modulus of elasticity (MPa) | 3452 | 3163 | 2592 | 2566 | 2917 | 2821 |
| Tensile strength (MPa) | 70.8 | 56.6 | 37.1 | 29.7 | 42.2 | 44.3 |
| Elongation at break (%) | 5.9 | 6.5 | 18.1 | 43.0 | 9.6 | 33.8 |
| Charpy impact, unnotched (kJ/m²) | 17.6 | 23.8 | DNB | DNB | DNB | DNB |
| Charpy impact, notched (kJ/m²) | - | - | 6.8 | 8.7 | 11.6 | 33.5 |

### Example 3

The following example shows that PDLA can also increase the crystallisation rate in PLLA. As PLLA is optically pure, the crystallisation rate in combination with PDLA is substantially higher than in the previous example. Better HDT-B values were obtained after crystallisation. And again better mechanical properties were observed.

**Table 3: PLLA & PDLA**

| **Component/Property** | **1** | **2** | **3** |
|---|---|---|---|
| Synterra® PLLA 1510 (Synbra) | 80 | - | - |
| Synterra® PLLA 1010 (Synbra) | - | 80 | 80 |
| Synterra® PDLA 0710 (Synbra) | 5 | 5 | - |
| Synterra® PDLA 1010 (Synbra) | - | - | 5 |
| DOA (Sigma) | 5 | 5 | 5 |
| Talc (Luzenac A10X C) | 10 | 10 | 10 |
| HDT-B (°C) | 123 | 122 | 123 |
| Modulus of elasticity (MPa) | 4144 | 3875 | 3453 |
| Tensile strength (MPa) | 48.3 | 47.8 | 47.7 |
| Elongation at break (%) | 14.0 | 7.8 | 9.9 |
| Charpy impact, unnotched (kJ/m²) | >86.8 | 60.8 | >88.6 |
| Charpy impact, notched (kJ/m²) | 3.1 | 2.6 | 4.6 |

### Example 4

The following example shows that the cycle time during injection-moulding can be reduced by using a mixture of PLLA and PDLA according to the present invention. Very short cycle times are obtained when extra talc and plasticiser are used. The molecular weight of the PDLA largely determines the crystallisation rate, and hence the cycle time. It was found to be possible to reduce the cycle time by lowering the molecular weight of the PDLA. Synterra^{®} PLLA 1098 and Synterra^{®} PDLA 1098 have an optical purity of less than 95%. It was possible to carry out the injection-moulding process fully automatically on the basis of formulations 3, 4 and 5, with a surprisingly short cycle time for these compounds.

**Table 4: Injection-moulding tests (* comparative example)**

| **Component/Property** | 1 | 2 | 3 | 4 | 5 | 6* | 7 | 8 |
|---|---|---|---|---|---|---|---|---|
| Synterra® PLLA 1010 (Synbra) | 95 | 95 | 80 | 80 | 80 | 100 | - | 80 |
| Synterra® PLLA 1098 | - | - | - | - | - | - | 80 | - |
| Synterra® PDLA 0710 (Synbra) | 5 | - | 5 | 2.5 | - | - | - | - |
| Synterra® PDLA 1010 (Synbra) | - | 5 | - | 2.5 | 5 | - | 5 | - |
| Synterra® PDLA 1098 | - | - | - | - | - | - | - | 5 |
| DOA (Sigma) | - | - | 5 | 5 | 5 | - | 5 | 5 |
| Talc (Luzenac A10X C) | - | - | 10 | 10 | 10 | - | 10 | 10 |
| MFR (g/10 min) | 2.6 | 5.8 | 2.2 | 4.1 | 6.8 | 11.5 | 6.0 | 6.5 |
| Cooling time (s) | 65 | 120 | 35 | 40 | 45 | 180 | 65 | 50 |
| Cycle time (s) | 85 | 150 | 55 | 60 | 65 | 200 | 85 | 70 |
| Modulus of elasticity (MPa) | 4072 | 4171 | 3559 | 3521 | 3516 | 3320 | 3500 | 3512 |
| Tensile strength (MPa) | 97.9 | 90.5 | 51.1 | 51.3 | 52.8 | 87.2 | 51.2 | 51.5 |
| Elongation at break (%) | 2.8 | 2.4 | 9.2 | 9.4 | 9.9 | 2.8 | 9.5 | 9.7 |
| Impact, notched (kJ/m²) | 4 | 5 | 7 | 7 | 8 | 7 | 7 | 8 |

### Example 5

Flowerpots were made by means of thermoforming using a formulation similar to that in the previous example. It was noted that the pressure in the extruder increased during the production of the sheet, after PDLA had been added to PLLA. This is an indication of improved melt strength. It proved to be possible to produce a sheet that is suitable for thermoforming using a formulation consisting of 65 parts by weight of Synterra^{®} PLLA 2010, 5 parts by weight of Synterra^{®} PDLA 1510 and 30 parts by weight of chalk. The thermoforming was carried out using both a cold and a hot (110°C) mould.

The crystallinity and crystallisation rate of PLA can be determined by means of Differential Scanning Calorimetry (DSC). In a DSC diagram, amorphous PLA will show only a glass transition point, at about 55°C, whereas semi-crystalline PLA will also show a crystallisation and/or melt peak. The size of the melt peak (Δx) is a measure of the extent to which crystallisation has taken place. The position of the melt peak is determined by the optical purity: as the optical purity of the PLA increases, this peak shifts towards a higher temperature, until a maximum of about 180°C is reached for PLLA or PDLA.

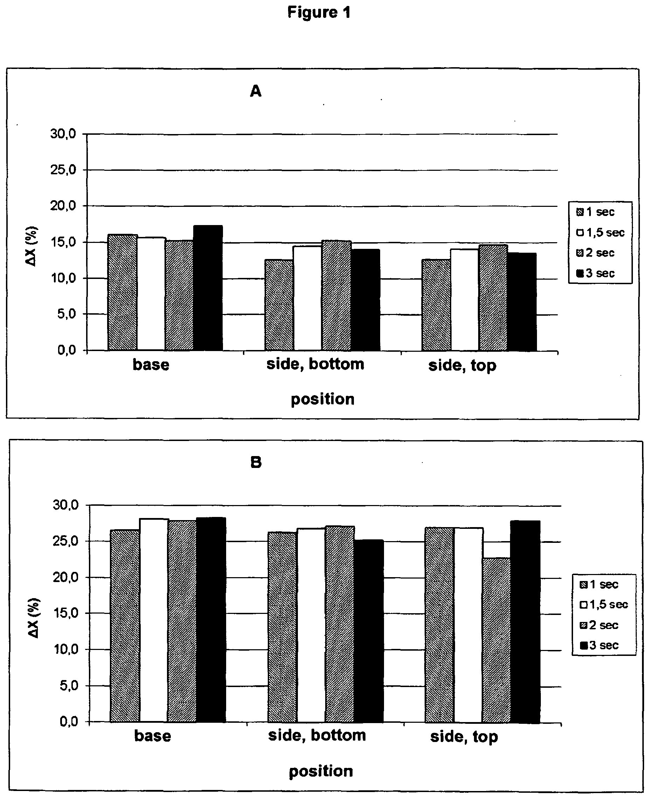

The diagrams in figure 1 show the difference in crystallinity between the flowerpots. Figure 1A shows the results obtained with pots made in a cold mould while figure 1B shows those obtained with a hot mould. It is evident that a high degree of crystallinity is realised in spite of the short cycle times. Also evident is that the effect is greater when the mould is heated. The flowerpots were subsequently held in boiling water, during which the flowerpot produced in the hot mould did not deform.

## Claims

1. A composition comprising a poly-D-lactic acid (PDLA) polymer and a poly-L-lactic acid (PLLA) polymer, the optical purity of at least the PDLA or the PLLA being at least 95%, and the PDLA being present in an amount of at most 10 wt.% relative to the weight of the total compound, and preferably at least 1 wt.%.

2. A composition according to claim 1, the PDLA being present in an amount of between 4 and 7 wt.%.

3. A composition according to any one or more of the preceding claims, the PLLA being present in an amount of between 65 and 85 wt.% relative to the compound's total weight.

4. A composition according to any one or more of the preceding claims that also comprises at least one filler selected from the group consisting of chalk, talc, starch, modified starch, flour, sawdust, flax, aluminium oxide, magnesium oxide, hydrated aluminium silicate, kaolin, the polymers PHA, PHB, PBS, PBT and PBAT, Ecoflex or cellulose, or mixtures thereof, the at least one filler preferably being present in an amount of at most 30 wt.% relative to the compound's total weight.

5. A composition according to any one or more of the preceding claims, the average molecular weight of the PDLA polymers or mixtures hereof varying from 70 to 300 kDa, preferably from 30 to 150 kDa, the molecular weight (Mn) being determined with the aid of GPC (Gel Permeation Chromatography), using polystyrene standards.

6. A composition according to any one or more of the preceding claims that also contains at least one impact modifier or plasticiser, preferably in an amount of at most 10 wt.%, preferably about 5 wt.%, relative to the compound's total weight.

7. A composition according to any one or more of the preceding claims, the optical purity of the PDLA being at least 95%, more preferably at least 99.5%, and the optical purity of the PLLA preferably being at least 95%, more preferably at least 99.5%

8. A method for the production of a moulded part comprising the steps of: i. heating a mould; ii. supplying to the mould a composition comprising a poly-D-lactic acid (PDLA) polymer and a poly-L-lactic acid (PDLA) polymer, the optical purity of at least the PDLA or the PLLA being at least 95% and the PDLA being present in an amount of at most 10 wt.% relative to the weight of the total compound, and preferably at least 1 wt.%;
iii. forming the moulded part and
iv. removing the moulded part from the mould..

9. A method according to claim 8, wherein the mould in step i is heated to a temperature of 90- 140°C, preferably 100-120°C.

10. A method according to claim 8 or 9, the composition supplied in step ii being one of the compositions according to any one of claims 2-7.

11. A method according to any one or more of claims 8-10 that is carried out within a certain time, called the cycle time, said cycle time being at most 150 seconds, preferably at most 85 seconds, more preferably at most 65 seconds.

12. A composition comprising a poly-D-lactic acid (PDLA) polymer and a poly-L-lactic acid (PLLA) polymer for use in injection-moulding, thermoforming and/or film blowing, the optical purity of at least the PDLA or the PLLA being at least 95% and the PDLA being present in an amount of at most 10 wt.% relative to the weight of the total compound, and preferably at least 1 wt.%.

13. A composition obtainable by heating a composition comprising a poly-D-lactic acid (PDLA) polymer and a poly-L-lactic acid (PLLA) polymer, the optical purity of at least the PDLA or the PLLA being at least 95% and the PDLA being present in an amount of at most 10 wt.% relative to the weight of the total compound, and preferably at least 1 wt.%.

14. A composition according to claim 13 obtainable by heating a composition according to any one of claims 2-7.

## Patentansprüche

1. Eine Zusammensetzung umfassend ein poly-D-Milchsäure (PDLA) -Polymer und ein poly-L-Milchsäure (PLLA) -Polymer, wobei die optische Reinheit zumindest der PDLA oder der PLLA mindestens 95 % beträgt und die PDLA in einer Menge von höchstens 10 Gew.-% und vorzugsweise mindestens 1 Gew.-%, bezogen auf das Gewicht der Gesamtverbindung, vorhanden ist.

2. Eine Zusammensetzung gemäß Anspruch 1, wobei die PDLA in einer Menge von zwischen 4 und 7 Gew.-% vorhanden ist.

3. Eine Zusammensetzung gemäß einem oder mehreren der voranstehenden Ansprüche, wobei die PLLA in einer Menge von zwischen 65 und 85 Gew.-% vorhanden ist, bezogen auf das Gesamtgewicht der Verbindung.

4. Eine Zusammensetzung gemäß einem oder mehreren der voranstehenden Ansprüche, die auch mindestens einen Füllstoff ausgewählt aus der Gruppe bestehend aus Kalk, Talk, Stärke, modifizierter Stärke, Mehl, Sägemehl, Flachs, Aluminiumoxid, Magnesiumoxid, hydratisiertem Aluminiumsilikat, Kaolin, den Polymeren PHA, PHB, PBS, PBT und PBAT, Ecoflex oder Cellulose oder Mischungen davon umfasst, wobei der mindestens eine Füllstoff vorzugsweise in einer Menge von höchstens 30 Gew.-% vorhanden ist, bezogen auf das Gesamtgewicht der Verbindung.

5. Eine Zusammensetzung gemäß einem oder mehreren der voranstehenden Ansprüche, wobei das mittlere Molekulargewicht des PDLA-Polymers oder Mischungen davon von 70 bis 300 kDa, vorzugsweise von 30 bis 150 kDa variiert, wobei das Molekulargewicht (Mn) mit Hilfe von GPC (Gelpermeationschromatographie) unter Verwendung von Polystyrol-Standards bestimmt wird.

6. Eine Zusammensetzung gemäß einem oder mehreren der voranstehenden Ansprüche, die auch mindestens einen Schlagzähmodifizierer oder Weichmacher enthält, vorzugsweise in einer Menge von höchstens 10 Gew.-%, vorzugsweise ungefähr 5 Gew.-%, bezogen auf das Gesamtgewicht der Verbindung.

7. Eine Zusammensetzung gemäß einem oder mehreren der voranstehenden Ansprüche, wobei die optische Reinheit der PDLA mindestens 95 %, bevorzugter mindestens 99,5 % beträgt und die optische Reinheit der PLLA vorzugsweise mindestens 95 %, bevorzugter mindestens 99,5 % beträgt.

8. Ein Verfahren zur Herstellung eines Formteils umfassend die Schritte des: i. Erhitzens einer Form; ii. Eingebens einer Zusammensetzung umfassend ein poly-D-Milchsäure (PDLA) -Polymer und ein poly-L-Milchsäure (PLLA) -Polymer in die Form, wobei die optische Reinheit zumindest der PDLA oder der PLLA mindestens 95 % beträgt und die PDLA in einer Menge von höchstens 10 Gew.-% und vorzugsweise mindestens 1 Gew.-%, bezogen auf das Gewicht der Gesamtverbindung, vorhanden ist;
iii. Formens des Formteils und
iv. Entfernens des Formteils aus der Form.

9. Ein Verfahren gemäß Anspruch 8, wobei die Form in Schritt i auf eine Temperatur von 90-140 °C, vorzugsweise 100-120 °C, erhitzt wird.

10. Ein Verfahren gemäß Anspruch 8 oder 9, wobei die in Schritt ii eingegebene Zusammensetzung eine der Zusammensetzungen gemäß einem der Ansprüche 2-7 ist.

11. Ein Verfahren gemäß einem oder mehreren der Ansprüche 8-10, das innerhalb einer bestimmten Zeit durchgeführt wird, genannt die Zykluszeit, wobei die Zykluszeit höchstens 150 Sekunden, vorzugsweise höchstens 85 Sekunden, noch bevorzugter höchstens 65 Sekunden beträgt.

12. Eine Zusammensetzung umfassend ein poly-D-Milchsäure (PDLA) -Polymer und ein poly-L-Milchsäure (PLLA) -Polymer zur Verwendung im Spritzgießen, Thermoformen und/oder Filmblasen, wobei die optische Reinheit zumindest der PDLA oder der PLLA mindestens 95 % beträgt und die PDLA in einer Menge von höchstens 10 Gew.-% und vorzugsweise mindestens 1 Gew.-%, bezogen auf das Gewicht der Gesamtverbindung, vorhanden ist.

13. Eine Zusammensetzung erhältlich durch Erhitzen einer Zusammensetzung umfassend ein poly-D-Milchsäure (PDLA) -Polymer und ein poly-L-Milchsäure (PLLA) -Polymer, wobei die optische Reinheit zumindest der PDLA oder der PLLA mindestens 95 % beträgt und die PDLA in einer Menge von höchstens 10 Gew.-% und vorzugsweise mindestens 1 Gew.-%, bezogen auf das Gewicht der Gesamtverbindung, vorhanden ist.

14. Eine Zusammensetzung gemäß Anspruch 13, erhältlich durch Erhitzen einer Zusammensetzung gemäß einem der Ansprüche 2-7.

## Revendications

1. Composition comprenant un polymère poly-acide D-lactique (PDLA) et un polymère poly-acide L-lactique (PLLA), la pureté optique au moins du PDLA ou du PLLA étant d'au moins 95 %, et le PDLA étant présent dans une quantité d'au plus 10 % en poids par rapport au poids du composé total, et de préférence d'au moins 1 % en poids.

2. Composition selon la revendication 1, le PDLA étant présent dans une quantité entre 4 et 7 % en poids.

3. Composition selon l'une quelconque ou plusieurs des revendications précédentes, le PLLA étant présent dans une quantité entre 65 et 85 % en poids par rapport au poids total du composé.

4. Composition selon l'une quelconque ou plusieurs des revendications précédentes qui comprend également au moins une charge choisie dans le groupe constitué de la craie, du talc, de l'amidon, de l'amidon modifié, de la farine, de la sciure, du lin, de l'oxyde d'aluminium, de l'oxyde de magnésium, du silicate d'aluminium hydraté, du kaolin, des polymères PHA, PHB, PBS, PBT et PBAT, de l'Ecoflex ou de la cellulose, ou de leurs mélanges, l'au moins une charge étant de préférence présente dans une quantité d'au plus 30 % en poids par rapport au poids total du composé.

5. Composition selon l'une quelconque ou plusieurs des revendications précédentes, le poids moléculaire moyen des polymères PDLA ou de leurs mélanges variant de 70 à 300 kDa, de préférence de 30 à 150 kDa, le poids moléculaire (Mn) étant déterminé à l'aide d'une GPC (chromatographie par perméation sur gel), en utilisant des normes de polystyrène.

6. Composition selon l'une quelconque ou plusieurs des revendications précédentes qui contient également au moins un antichoc ou un plastifiant, de préférence dans une quantité d'au plus 10 % en poids, de préférence d'environ 5 % en poids, par rapport au poids total du composé.

7. Composition selon l'une quelconque ou plusieurs des revendications précédentes, la pureté optique du PDLA étant d'au moins 95 %, de manière davantage préférée d'au moins 99,5 %, et la pureté optique du PLLA étant de préférence d'au moins 95 %, de manière davantage préférée d'au moins 99,5 %.

8. Procédé pour la production d'une pièce moulée comprenant les étapes de : i. chauffage d'un moule ; ii. fourniture au moule d'une composition comprenant un polymère de poly-acide D-lactique (PDLA) et un polymère de poly-acide L-lactique (PLLA), la pureté optique au moins du PDLA ou du PLLA étant d'au moins 95 % et le PDLA étant présent dans une quantité d'au plus 10 % en poids par rapport au poids du composé total, et de préférence d'au moins 1 % en poids ;
iii. formation de la pièce moulée et
iv. enlèvement de la pièce moulée du moule.

9. Procédé selon la revendication 8, dans lequel le moule à l'étape i est chauffé à une température de 90 à 140 °C, de préférence 100 à 120 °C.

10. Procédé selon la revendication 8 ou 9, la composition fournie à l'étape ii étant l'une des compositions selon l'une quelconque des revendications 2 à 7.

11. Procédé selon l'une quelconque ou plusieurs des revendications 8 à 10 qui est réalisé en un certain temps, dénommé le temps de cycle, ledit temps de cycle étant d'au plus 150 secondes, de préférence d'au plus 85 secondes, de manière davantage préférée d'au plus 65 secondes.

12. Composition comprenant un polymère de poly-acide D-lactique (PDLA) et un polymère de poly-acide L-lactique (PLLA) destinée à être utilisée en moulage par injection, thermoformage et/ou soufflage de feuille, la pureté optique au moins du PDLA ou du PLLA étant d'au moins 95 % et le PDLA étant présent dans une quantité d'au plus 10 % en poids par rapport au poids du composé total, et de préférence d'au moins 1 % en poids.

13. Composition pouvant être obtenue en chauffant une composition comprenant un polymère de poly-acide D-lactique (PDLA) et un polymère de poly-acide L-lactique (PLLA), la pureté optique au moins du PDLA ou du PLLA étant d'au moins 95 % et le PDLA étant présent dans une quantité d'au plus 10 % en poids par rapport au poids du composé total, et de préférence d'au moins 1 % en poids.

14. Composition selon la revendication 13 pouvant être obtenue en chauffant une composition selon l'une quelconque des revendications 2 à 7.
